# EUROPÄISCHE PATENTSCHRIFT

(11) **EP 1 949 825 B1**
(45) Veröffentlichungstag und Bekanntmachung des Hinweises auf die Patenterteilung: **22.07.2009**
(21) Anmeldenummer: 07001475.8
(22) Anmeldetag: 24.01.2007
(51) Int. Cl.: A47J 31/06

(54) **Maschine mit komplett entnehmbarer Brühkammer**
Machine with completely removable brew chamber
Machine dotée d'une chambre à infusion entièrement amovible

(43) Veröffentlichungstag der Anmeldung: 30.07.2008
(73) Patentinhaber: WMF WÜRTTEMBERGISCHE METALLWARENFABRIK AG, 73309 Geislingen/Steige (DE)
(72) Erfinder: Boerner, Cornelius, 73329 Kuchen (DE); Dollner, Sander, 89079 Ulm-Wiblingen (DE); Startz, Armin, 89197 Weidenstetten (DE)
(74) Vertreter: Grünecker, Kinkeldey, Stockmair & Schwanhäusser Anwaltssozietät

(56) Entgegenhaltungen:
- EP-A- 1 092 376
- WO-A-97/43937
- NL-C1- 1 027 898
- US-A1- 2005 034 605

## Beschreibung

Die Erfindung betrifft eine Maschine zur Zubereitung eines Heißgetränkes gemäß dem Oberbegriff des Anspruchs 1, sowie ein Maschinensystem mit einer solchen Maschine und ein Verfahren zur Zubereitung eines Heißgetränkes, wie aus der US 2005/003405 bekannt.

Solche Maschinen, insbesondere Kaffeemaschine, bei denen unter Druck Brühwasser über das Kaffeemehl geleitet wird, sind bereits aus dem Stand der Technik bekannt.

Die Kaffeemaschinen weisen eine Brühkammer auf, die während der Brühung gegen die Umgebung abgedichtet ist. Die Brühkammer ist dabei in der Regel zweiteilig ausgeführt, bei der mindestens ein Teil beweglich an der Maschine angeordnet ist. In der WO 2005/072572 ist z.B. ein Schublade beschrieben, die das Brühkammerunterteil darstellt. Das Brühkammeroberteil ist an der Maschine befestigt. In der EP 090471 A1 ist eine weitere Ausführungsmöglichkeit einer solchen Brühkammer beschrieben. Dabei ist das Brühkammeroberteil schwenkbar gelagert.

Die aus dem Stand der Technik bekannten Kaffeemaschinen weisen jedoch erhebliche Nachteile auf. Dadurch, dass zumindest ein Teil der Brühkammer an der Maschine angeordnet ist, sind aufwändige Verschlussmechanismen notwendig, die das System gegen die Umgebung abdichten. Die aufgrund des erhöhten Innendrucks auftretenden Axialkräfte während der Brühung müssen vom Verschlusssystem aufgenommen werden.

Das mit der Maschine verbundene Teil ist nur schwer zugänglich und kann somit nur erschwert oder gar nicht gereinigt werden. Zur Wartung oder Reinigung muss es demontiert werden.

Zum Austausch des befestigten Brühkammerteils sind oft Spezialwerkzeuge notwendig. Somit kann der Kunde nicht einfach die Brühkammer wechseln.

Darüber hinaus schränkt der Aufbau die Designfreiheit stark ein.

Hiervon ausgehend liegt der vorliegenden Erfindung die Aufgabe zugrunde, eine verbesserte Maschine und ein Verfahren zur Zubereitung eines Heißgetränkes bereitzustellen, die eine vereinfachte und praktischere Handhabung ermöglicht und die einfach und gründlich gereinigt werden kann.

Erfindungsgemäß wird diese Aufgabe durch die Merkmale des Anspruchs 1 gelöst. Dadurch, dass die Brühkammer nicht am Gehäuse befestigt ist, sondern komplett aus dem Gehäuse entnehmbar ist, können alle mit Kaffeemehl in Berührung kommenden Teile sehr gut außerhalb der Maschine gereinigt werden. Im entnommenen Zustand kann dann die Brühkammer geöffnet werden und mit dem aufzubrühenden Medium befüllt werden. Die Brühkammer kann dann wieder verschlossen werden und als Ganzes in das Maschinengehäuse eingesetzt werden. Dann kann unter Druck Brühwasser in die Brühkammer geleitet werden, wobei die Brühkammer derart abgedichtet ist, dass sich ein erhöhter Druck in der Brühkammer aufbauen kann, wonach das fertige Heißgetränk aus der Brühkammer auslaufen kann. Dadurch, dass die Brühkammer als Ganzes außerhalb des Gehäuses befüllt und entleert werden kann, ergibt sich eine vereinfachte und sauberere Handhabung.

Gemäß einer bevorzugten Ausführungsform ist die Brühkammer zweiteilig aufgebaut. Sie weist vorzugsweise ein Oberteil und ein Unterteil auf. Das Oberteil und das Unterteil sind über einen Verschließmechanismus verbunden. Der Verschließmechanismus, beispielsweise Gewindenocken oder Bajonettverschluss, verriegelt die Brühkammer und nimmt die beim Brühen durch den Überdruck entstehenden Axialkräfte auf.

In vorteilhafter Weise weist das Gehäuse ein Einschubfach auf, in das die Brühkammer einschiebbar ist. Das Einschieben der Brühkammer erlaubt ein einfaches Austauschen der Brühkammer im Gehäuse. Vorteilhafterweise können dann die Abmessungen des Einschubfachs derart ausgebildet sein, dass die Oberseite des Oberteils und die Unterseite des Unterteils zumindest teilweise an dem Einschubfach anliegen. Eine solche formschlüssige Verbindung zwischen Brühkammer und Gehäuse bringt den Vorteil mit sich, dass dadurch die durch den Überdruck in der Brühkammer wirkenden axialen Kräfte aufgenommen werden können und somit ein Aufdrücken der Brühkammer wirksam verhindert werden kann.

Es ist weiter vorteilhaft, wenn die Abmessungen des Einschubfachs derart ausgebildet sind, dass die Brühkammer auch seitlich an dem Einschubfach anliegt, so dass die Kammerhälften auch in Radialrichtung miteinander fixiert sind. Radiale Brühkräfte werden direkt von den Kammerhälften aufgenommen.

Ein Fügespalt zwischen Oberteil und Unterteil der Brühkammer wird über eine innere Dichtung, beispielsweise einen Dichtring abgedichtet.

Die Brühkammer weist einen Öffnungsabschnitt auf, über den das Brühwasser zugeführt wird, wobei auch in diesem Bereich eine Abdichtung zwischen Brühkammer und Gehäuse vorgesehen ist.

Durch die oben genannten Maßnahmen wird eine ideale Abdichtung der Brühkammer auf einfache Art und Weise ohne komplizierte Verschlussmechanismen erzielt. Darüber hinaus sind am Gehäuse keine Verschlussmechanismen notwendig, die einem Verschleiß unterliegen.

Vorteilhafterweise weist die Brühkammer eine Kodierung auf, die einen bestimmten Brühkammertyp angibt, und weiter weist die Maschine eine Sensorrichtung auf, die die Kodierung erfasst. Somit können die einzelnen Brühkammern speziell auf das zu verarbeitende Medium, z.B. Kaffeemehl, Kaffeepads, Kaffeekapseln, offener Tee etc. ausgelegt werden und vom Kunden individuell ausgetauscht werden. Wenn die Sensoreinrichtung die Kodierung erfasst, kann die Maschine in Abhängigkeit der erfassten Kodierung, die einem bestimmten Druckkammertyp entspricht, den Brühvorgang steuern. Somit ist sichergestellt, dass für ein bestimmtes zu verarbeitendes Medium ein dazu passender Brühprozess gewählt wird.

Gemäß einer bevorzugten Ausführungsform weist die Maschine einen Bereich zum Einschieben eines Gefäßes, z.B. einer Tasse, auf. Vorteilhafterweise ist das Einschubfach in oder über diesem Bereich angeordnet. Somit ist die Brühkammer besonders leicht von außen zugänglich. Der Aufbau und das Design der Maschine können somit erheblich vereinfacht werden. Besonders gut greifbar ist die Brühkammer, wenn sie über eine Außenseite des Gehäuses vorsteht, z. B. über die Vorderseite.

Die vorliegende Erfindung wird nachfolgend unter Bezugnahme der folgenden Figuren näher erläutert.
- Figur 1: zeigt schematisch eine perspektivische Darstellung einer Maschine gemäß der vorliegenden Erfindung mit eingeschobener Brühkammer.
- Figur 2: zeigt schematisch in perspektivischer Darstellung die in Figur 1 gezeigte Maschine mit entnommener Brühkammer.
- Figur 3: zeigt das Oberteil und Unterteil der Brühkammer in perspektivischer Darstellung.
- Figur 4: zeigt eine Explosionsdarstellung der wesentlichen Teile der in Figuren 1 und 2 gezeigten Maschine.
- Figur 5: zeigt in perspektivischer Darstellung das Oberteil der Brühkammer gemäß der vorliegenden Erfindung.
- Figur 6: zeigt schematisch einen Schnitt durch eine erfindungsgemäße Brühkammer.
- Figur 7: zeigt eine Explosionsdarstellung einer möglichen Ausführungsform einer Brühkammer gemäß der vorliegenden Erfindung.
- Figur 8: zeigt eine Seitenansicht der in Figur 1 gezeigten Maschine.

Nachfolgend wird die vorliegende Erfindung im Zusammenhang mit einer Ein-Tassen-Maschine zur Zubereitung eines Heißgetränkes beschrieben. Gerade bei einem Ein-Tassen-System ist es besonders vorteilhaft, wenn die Brühkammer insbesondere das Befüllen und Reinigen der Brühkammer mit zu brühendem Medium einfach gehandhabt werden kann. Die vorliegende Erfindung ist jedoch nicht auf ein solches Ein-Tassen-System beschränkt.

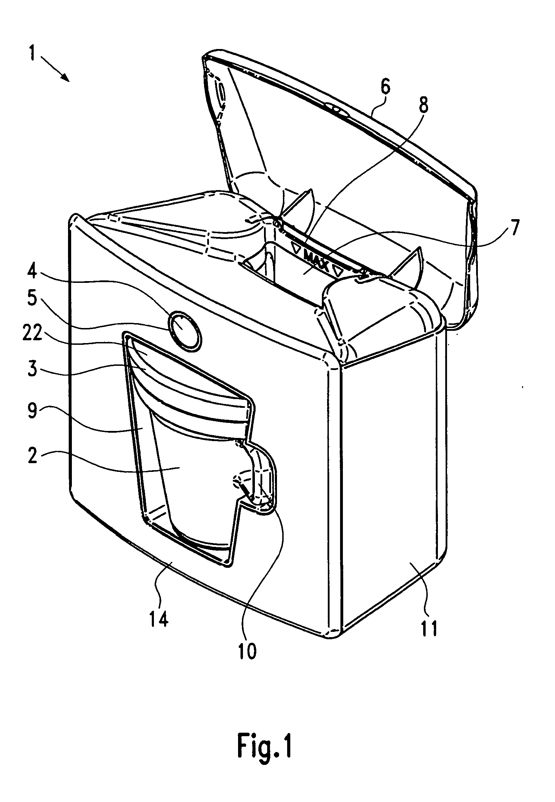

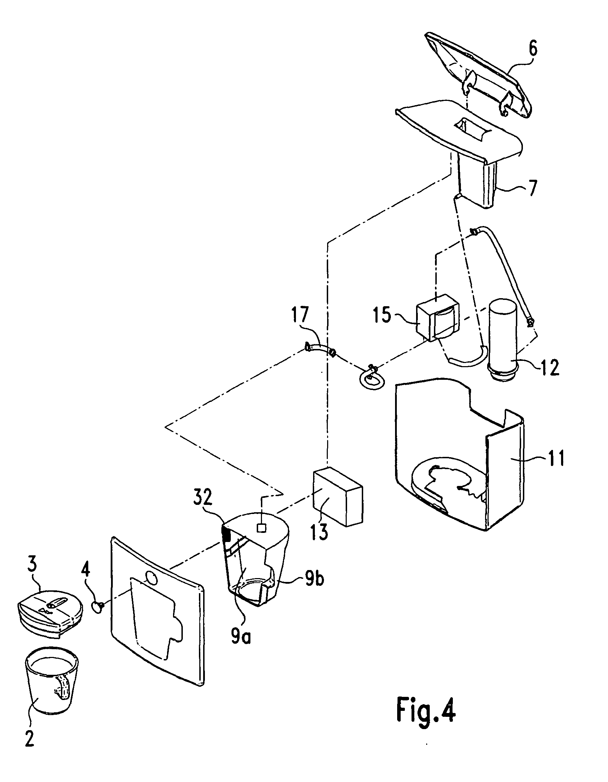

Figur 1 zeigt in perspektivischer Darstellung eine mögliche Ausführungsform einer Maschine 1 zur Zubereitung eines Heißgetränks. Figur 4 zeigt eine Explosionsdarstellung der wichtigsten Komponenten. Eine solche Maschine 1 kann beispielsweise Kaffe oder Tee etc. zubereiten. Die Maschine 1 weist dabei ein Gehäuse 11 auf, das an seiner Oberseite einen Deckel 6 aufweist, mit dem das Gehäuse 11 geöffnet und verschlossen werden kann. In dem Gehäuse 11 befindet sich ein Wassertank 7 mit einer Füllstandsmarkierung 8, bis zu welcher Wasser für das Heißgetränk eingefüllt werden kann. Bei der Maschine 1 handelt es sich, wie bereits erwähnt, um eine Ein-Tassen-Maschine. Die Größe bzw. das Fassungsvolumen des Wassertanks 7 ist derart ausgelegt, dass er nur die Wassermenge aufnehmen kann, die zur Erzeugung einer Tasse 2 an Heißgetränk benötigt wird. Das vorbestimmte Volumen liegt dabei z. B. in einem Bereich von 100 bis 200 ml, je nach Tassengröße. Durch das kleine Wassertankvolumen ist am Ende der Brühung der Tank leer. Somit können keine Verunreinigungen durch lange Wasseraufbewahrung im Tank auftreten.

Weiter weist die Maschine 1 ein in Figur 4 dargestelltes Heizsystem 12 auf, das das Wasser aus dem Wassertank 7 erhitzt. Dabei können Boilersysteme oder Thermoblockheizungen verwendet werden. Das Heizsystem 12 ist so dimensioniert, dass es ausreicht, um eine Wassermenge für nur eine Tasse Heißgetränk zu erhitzen. Die Maschine 1 besitzt also nur eine Brühmenge, auf die die Größe und Leistung des Heizsystems 12 ausgelegt ist. Bei dem Erfindungsgemäßen Ein-Tassen-System wird also nur diejenige Menge an Energie zugeführt, die zum Bereitstellen einer Tasse Brühwasser benötigt wird. Damit kann im Gegensatz zu anderen Geräten energieeffizienter das Brühwasser für eine Tasse bereitgestellt werden.

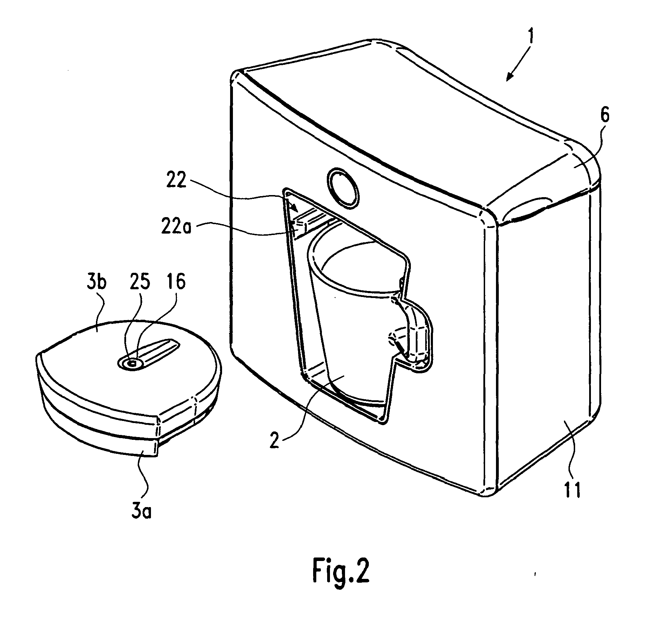

Weiter weist, wie aus den Figuren 1 und 2 hervorgeht, die Maschine einen Bereich 9 auf zur Aufnahme einer Tasse 2, in die das Heißgetränk abgefüllt wird.

Die Größe der Kammer 9 ist derart ausgelegt, dass eine Tasse 2 darin Platz findet. Im oberen Bereich der Kammer 9 befindet sich die eingeschobene Brühkammer 3. Bei eingesetzter Brühkammer 3 ergibt sich ein Hohlraum, dessen Längsschnitt (parallel zur Vorderseite 14 des Gehäuses 11) eine Form aufweist, die angepasst, d.h., komplementär zur Form der darin stehenden Tasse 2 ist. Das bedeutet, dass die Innenseite der Kammer 9 an die Form der Tasse 2 angepasst ist. Zwischen Tasse 2 und Kammer 9 sollte ein Abstand vorgesehen sein, damit die Tasse einfach eingeschoben und entnommen werden kann. Damit auch Tassen mit Henkel verwendet werden können, weist die Kammer 9 auf zumindest einer Seite einen Bereich 9b auf, der sich von einer Seitenwand des Hauptbereichs 9a seitlich erstreckt, um beispielsweise einen Henkel 10 der Tasse 2 aufzunehmen. Diese Ausbildung ermöglicht eine sehr platzsparende Anordnung des Bereichs zur Aufnahme der Tasse 2, so dass insgesamt Platz gespart werden kann.

Weiter weist die Maschine 1 nur eine Taste 4 für den kompletten Betrieb auf. Die Taste 4, die hier als Drucktaste ausgebildet ist, weist eine Leuchtanzeige 5, hier in Form eines Leuchtrings 5, auf.

Die Taste bzw. der Schalter 4 ist mit der Steuereinheit 13 verbunden, die wiederum mit dem Heizsystem 12, der Pumpe 15 sowie mit der Leuchtanzeige 5 verbunden ist. Die Leuchtanzeige 5 zeigt dabei die wesentlichen Betriebszustände der Maschine an.

Wird die Taste 4 betätigt schaltet sich die Maschine an, dabei wird die Maschine 1 von der Steuereinheit 13 so gesteuert, dass genau die Wassermenge gebrüht wird, die sich im Tank befindet. D. h., dass die bestimmte Energiemenge an das Heizsystem 12 geliefert wird, die nötig ist, um Brühwasser für eine Tasse 2 zu erzeugen und das gesamte Wasser aus dem Tank gepumpt wird. Die bestimmte Energiemenge kann vorab in Abhängigkeit des Tassenvolumens vorgegeben werden, d. h. konstant sein. Es ist jedoch auch möglich, über entsprechende Messungen (z. B. Temperatur oder Druck, etc.) das Ende des Aufheizvorgangs zu bestimmen. Die Steuereinheit kann auch ein entsprechendes Signal an die Pumpe geben, so dass die gesamte Wassermenge im Tank abgepumpt wird. Gleichzeitig schaltet die Steuereinheit 13 auch die Leuchtanzeige an die aufleuchtet und somit anzeigt, dass die Maschine in Betrieb ist.

Ist eine ausreichende Energiemenge zugeführt, wird die Energiezufuhr beendet. Das aufgeheizte Wasser kann über eine entsprechende Leitung über die Dichteinrichtung 16 in die Brühkammer 3 unter Druck gedrückt werden, wobei sich in der Brühkammer 3 ein erhöhter Druck aufbaut. Eine bestimmte Produktmenge wird dann in die Tasse am unteren Ende der Brühkammer 3 ausgegeben.

Nach Beendigung der Energiezufuhr und des Brühvorgangs kann die Steuereinheit 13 die Leuchtanzeige sofort oder nach einer bestimmten Zeit ausschalten. Die Maschine schaltet sich dann automatisch ab. Die Maschine bleibt ausgeschaltet, solange die Taste 4 nicht betätigt wird.

Ein Ein-Tassen-System zum Zubereiten einer Tasse Heißgetränk weist dabei vorteilhafter Weise die erfindungsgemäße Maschine 1 sowie mindestens eine passende Normtasse 2 auf, deren Volumen bekannt ist, wobei die Größe und Form der Kammer, wie zuvor beschrieben, an die Tasse 2 angepasst ist, und auch die Heizleistung des Heizsystems 12 und das Füllvolumen des Tanks 7 an das Tassenvolumen angepasst sind.

Gemäß der vorliegenden Erfindung ist die Brühkammer 3 nicht an dem Gehäuse 11 befestigt, sondern kann komplett entnommen werden. Figur 1 zeigt die Maschine 1 mit vollständig eingeschobener Brühkammer 3. Figur 2 zeigt die Maschine 1 mit entnommener Brühkammer 3. Vollständig bzw. komplett entnehmbar bedeutet hier, dass beide Teile,hier also sowohl Oberteil 3b als auch Unterteil 3a der Brühkammer, als Ganzes gleichzeitig aus der Maschine 1 entnommen werden können. In die Brühkammer 3 können Kaffeepulver oder Kaffeepads, Kapseln bzw. Teepulver etc. gefüllt werden.

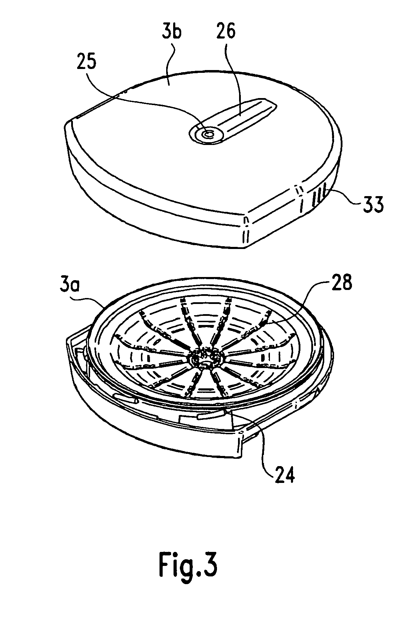

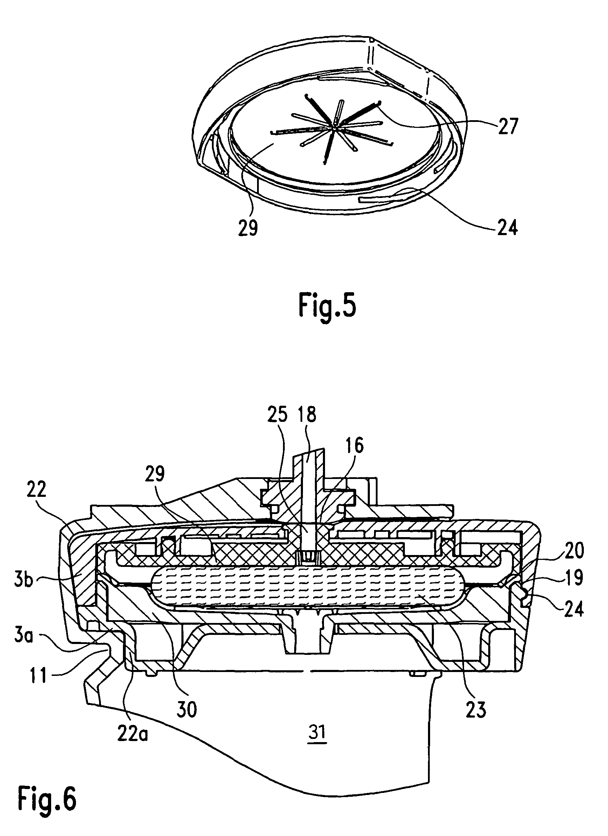

Wie aus den Figuren 3, 5 und 6 hervorgeht, ist die Brühkammer 3 hier zweiteilig ausgebildet. Sie umfasst das Oberteil 3b und ein Unterteil 3a, die über einen Verschließmechanismus 24 verbindbar sind. Ein solcher Verschließmechanismus 24 kann beispielsweise durch Gewindenocken 24 (s. Figur 5) oder aber auch durch einen Schraubverschluss oder Bajonettverschluss etc. realisiert sein. Solche Verschlussmechanismen sind außerordentlich verschleißarm. Die beiden Brühkammerteile 3a, b weisen, wie aus Figur 6 hervorgeht, einen Fügespalt 19 auf. Dieser Fügespalt wird durch eine innere Dichtung 20, vorzugsweise einen entsprechenden Dichtring abgedichtet. Durch den erhöhten Druck in der Brühkammer 3 wird der Dichtring dann an den Fügespalt 19 gepresst, wodurch eine sehr gute Dichtung realisiert werden kann.

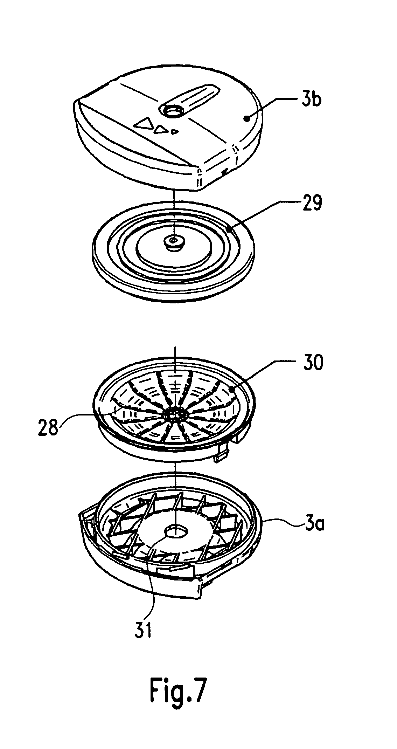

Wie insbesondere aus der Figur 7 hervorgeht, weist in diesem Ausführungsbeispiel die Brühkammer 3b zusätzlich noch einen unteren Einsatz 30 sowie einen oberen Einsatz 29 auf. Der untere Einsatz 30 wird in das Unterteil 3a eingesetzt und weist sich radial erstreckende Stege 28 auf, die zu einem Auslass 31 der Brühkammer führen, und die den Ablauf des gebrühten Mediums zum Auslauf 31 hin begünstigen. Auch der Einsatz 29, der am Oberteil 3b befestigt ist, weist, wie aus Figur 5 ersichtlich ist, sich radial erstreckende Stege oder Kanäle 27 auf, die sich von einem Abschnitt 25, von dem aus Brühwasser in die Brühkammer 3 geführt wird, nach außen erstrecken. Der obere Einsatz dient hier als Dichtsystem. Wie aus Figur 6 hervorgeht, erstreckt sich der untere Einsatz 30 bis in die untere Öffnung des Unterteils 3a und bildet die Auslauföffnung. Dabei erfolgt die Fixierung des Einsatzes am Unterteil 3a durch Schnapphacken.

Das Gehäuse 11 weist ein Einschubfach 22 auf (beispielsweise mit einer Einschubschiene 22a), in das die Brühkammer 3 eingeschoben wird. Das Einschubfach 22 ist so ausgelegt, dass die Brühkammer 3 eine genaue Lage in dem Gehäuse 11 erfährt und exakt zu der Zuführung 18 (s. Figuren 4 und 6), über die Brühwasser zugeführt wird, ausgerichtet ist. Somit kann Brühwasser über die Brühwasserzuführung 18, das mit Hilfe der Pumpe 15 aus dem Wassertank 7 gepumpt wurde, und von dem Heizsystem 12 erhitzt wurde, in die Brühkammer 3 unter hohem Druck eingebracht werden. Dabei ist weiter eine Dichtung 16 (s. Figur 6) vorgesehen, die die Brühkammer zum Gehäuse 11 abdichtet.

Der auftretende Brühdruck bringt axiale Kräfte auf die Brühkammerteile 3a, b mit sich. Ein Aufdrücken der Brühkammer kann verhindert werden durch
a) formschlüssiges Verbinden der Brühkammerteile 3a, b mit dem Gehäuse 11. Dabei sind die Abmessungen des Einschubfaches 22 und der Brühkammer 3b derart ausgebildet, dass die Oberfläche des Oberteils 3b und die Unterseite des Unterteils 3a zumindest teilweise an dem Einschubfach 22 anliegen. Somit kann die axialwirkende Kraft von dem Gehäuse 11 aufgenommen werden, wodurch die Brühkammer nicht aufgedrückt wird,
b) die Brühkammerteile 3a, b werden, wie zuvor beschrieben, außerhalb der Maschine über den Verschließmechanismus, wie beispielsweise die Gewindenocken 24 oder einem Bajonettverschluss etc. fest verschlossen. Diese Verriegelung nimmt dann die entstehenden Axialkräfte auf.

Eine Kombination der Maßnahmen a) und b) ist besonders wirksam.

Vorteilhafterweise wird die Abmessung des Einschubfachs 22 derart bemessen, dass die Brühkammer 3 seitlich an dem Einschubfach anliegt. Somit sind die Brühkammerteile 3a, b nach dem Einschieben in der Einschubfach 22 auch in Radialrichtung miteinander fixiert. Radiale Brühkräfte werden dann direkt von den Brühkammerteilen 3a, b aufgenommen.

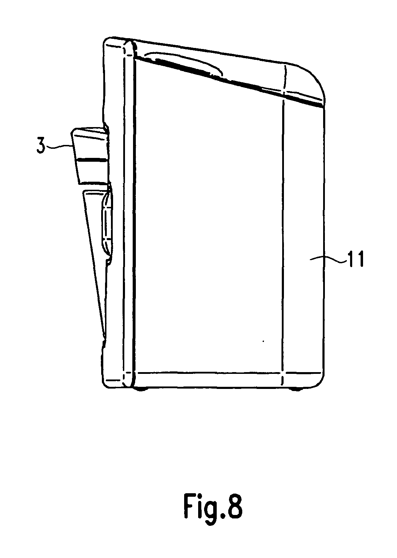

Vorteilhafter Weise steht, wie aus Figur 8 hervorgeht, die Brühkammer über die Vorderseite 14 des Gehäuses bzw. über die Einschubkammer 22 vor, so dass sie leicht gegriffen werden kann.

Wie aus Figur 3 hervorgeht, weist die Oberseite des Oberteils 3b die Öffnung des zuvor genannten Leitungsabschnitts 25 auf, über den Brühwasser zugeführt wird. Weiter weist die Oberfläche eine Vertiefung 26 auf, die erlaubt, dass die Brühkammer in dem Einschubfach 22 eingeschoben werden kann und mit der Zuführung 18 der Maschine an der richtigen Stelle in Verbindung kommen kann.

Gemäß einer bevorzugten Ausführungsform weist ein Maschinensystem unterschiedliche Brühkammertypen auf. Die unterschiedlichen Brühkammern 3 können speziell auf das zu verarbeitende Medium 23, wie Kaffeemehl, Kaffeepads, Kaffeekapseln, offene Tees etc. ausgelegt werden und vom Kunden individuell ausgetauscht werden.

Es ist vorteilhaft, wenn dann die unterschiedlichen Brühkammern eine unterschiedliche Kodierung aufweisen, die, wie beispielsweise in Figur 3 gezeigt ist, an der Seite der Brühkammer 3 angeordnet sein kann. Dabei kann die Maschine 1 eine Sensoreinrichtung 32 aufweisen (s. Figur 4), die die Kodierung erkennen kann (z.B. in Form eines Reedschalters). Ein entsprechendes Signal kann dann an die Steuereinrichtung 13 geleitet werden. Die Steuerung 13 steuert dann den Brühvorgang in Abhängigkeit der detektierten Brühkammer, so dass ein zu dem entsprechenden Medium passender Brühprozess durchgeführt wird.

Gemäß der vorliegenden Erfindung wird bei einem Betriebsverfahren zur Zubereitung eines Heißgetränkes die aus dem Gehäuse entnommene Brühkammer 3 geöffnet und mit dem aufzubrühenden Medium 23 befüllt. Die Brühkammer wird dann verschlossen indem Oberteil und Unterteil der Brühkammer 3 miteinander verbunden und vorzugsweise über einen Verschließmechanismus 24 verriegelt werden. Die Brühkammer 3 wird dann als Ganzes in das Einschubfach 22 des Maschinengehäuses 11 eingeschoben, so dass, wie aus Figur 6 ersichtlich ist, der Leitungsabschnitt 25 in der Brühkammer in Verbindung mit der Zuführung 18 der Maschine zu liegen kommt. Wenn eine entsprechende Taste 4 gedrückt wurde, wird unter Druck Brühwasser in die Brühkammer 3 geleitet( wie zuvor beispielsweise im Zusammenhang mit dem Ein-Tassen-System beschrieben wurde). Das fertige Heißgetränk läuft dann über die Auslassöffnung 31 aus der Brühkammer 3 in ein Gefäß, vorzugsweise in die Tasse 2.

Zum Entleeren des Mediums kann die Brühkammer als Ganzes mit nur einem Handgriff aus dem Einschubfach 22 herausgezogen werden. Die Brühkammer 3 kann dann außerhalb des Gehäuses geöffnet werden, wobei alle mit Kaffee in Berührung kommenden Teile einfach vom Kunden gereinigt werden können.

Die vorliegende Erfindung bringt die Vorteile mit sich, dass am Gerät, d.h. am Maschinengehäuse 11, kein Verschlussmechanismus notwendig ist, der einem Verschleiß unterliegt, wie dies im Stand der Technik der Fall ist. Alle mit dem zu extrahierenden Medium in Berührung kommenden Teile können sehr gut außerhalb der Maschine gereinigt werden. Alle mit dem extrahierten Medium in Berührung kommenden Teile können darüber hinaus einfach vom Kunden durch Ersetzen der Brühkammer ausgetauscht werden. Darüber hinaus gibt es eine sehr große Freiheit im Design.

## Patentansprüche

1. Maschine (1) zur Zubereitung eines Heißgetränks mit einem Gehäuse (11), einem Wassertank (7) und einer wiederverschließbaren und wiederbefüllbaren Brühkammer (3), wobei
die Brühkammer (3) zum Befüllen, Entleeren und Reinigen komplett aus dem Gehäuse entnehmbar ist,
das Gehäuse (11) ein Einschubfach (22) aufweist, in das die Brühkammer (3) als Ganzes einschiebbar ist und
die Brühkammer (3) ein Oberteil (3b) und ein Unterteil (3a) umfasst,
**dadurch gekennzeichnet, dass**
die Brühkammer (39 zweiteilig ausgebildet ist und
das Oberteil (3b) und das Unterteil (3a) über einen Verschließmechanismus (24) verbindbar und außerhalb der Maschine verriegelbar sind.

2. Maschine nach Anspruch 1,
**dadurch gekennzeichnet, dass**
die Abmessungen des Einschubfachs (22) derart ausgebildet sind, dass die Oberseite des Oberteils (3b) und die Unterseite des Unterteils (3a) zumindest teilweise an dem Einschubfach (22) anliegen.

3. Maschine nach mindestens einem der Ansprüche 1 oder 2,
**dadurch gekennzeichnet, dass**
die Abmessungen des Einschubfachs (22) derart ausgebildet sind, dass die Brühkammer (3) seitlich an dem Einschubfach (22) anliegt.

4. Maschine nach mindestens einem der Ansprüche 2 bis 3,
**dadurch gekennzeichnet, dass**
ein Fügespalt (19) zwischen dem Oberteil (3b) und dem Unterteil (3a) durch eine innere Dichtung (20) abgedichtet wird.

5. Maschine nach mindestens einem der Ansprüche 1 bis 4,
**dadurch gekennzeichnet, dass**
die Brühkammer (3) einen Abschnitt aufweist über den Brühwasser zuführbar ist, wobei in diesem Bereich eine Abdichtung (16) zwischen Brühkammer (3) und Gehäuse (11) vorgesehen ist.

6. Maschine nach mindestens einem der Ansprüche 1 bis 5,
**dadurch gekennzeichnet, dass**
die Brühkammer (3) eine Kodierung (33) aufweist, die einen bestimmten Brühkammertyp angibt, und weiter eine Sensoreinrichtung (32) vorgesehen ist, die die Kodierung erfasst.

7. Maschine nach Anspruch 6,
**dadurch gekennzeichnet, dass**
die Maschine (1) eine Steuerung (13) aufweist, die in Abhängigkeit der erfassten Kodierung (33) den Brühvorgang steuert.

8. Maschine nach mindestens einem der Ansprüche 1 bis 7,
**dadurch gekennzeichnet, dass**
die Maschine (1) einen Bereich (9) zum Einschieben eines Gefäßes (2) aufweist.

9. Maschine nach Anspruch 8,
**dadurch gekennzeichnet, dass**
das Einschubfach in oder über dem Bereich (9) zum Einschieben eines Gefäßes angeordnet ist.

10. Maschine nach mindestens einem der Ansprüche 1 bis 9,
**dadurch gekennzeichnet, dass**
die Brühkammer (3) über eine Außenseite des Gehäuses (11) vorsteht.

11. Maschinensystem mit einer Maschine zur Zubereitung eines Heißgetränkes nach mindestens einem der Ansprüche 1 bis 10, sowie
mehreren unterschiedlichen Brühkammern unterschiedlichen Typs, die jeweils auf ein zu verarbeitendes Medium ausgelegt sind.

12. Maschinensystem nach Anspruch 11,
**dadurch gekennzeichnet, dass**
die unterschiedlichen Brühkammertypen jeweils eine entsprechende Kodierung (33) aufweisen.

13. Verfahren zur Zubereitung eines Heißgetränkes mit einer Maschine (1) nach mindestens einem der Ansprüche 1 bis 12, wobei
a) die als Ganzes aus dem Gehäuse (11) entnommene zweiteilig ausgebildete Brühkammer (3) geöffnet und mit dem aufzubrühenden Medium (23) befüllt wird,
b) das Oberteil (3b) und das Unterteil (3a) der Brühkammer miteinander verbunden werden, so dass die Brühkammer (3) verschlossen und verriegelt wird und als Ganzes in das Maschinengehäuse (11) eingeschoben wird,
c) unter Druck Brühwasser in die Brühkammer (3) geleitet wird, und
d) das fertige Heißgetränk aus der Brühkammer (3) läuft.

14. Verfahren nach Anspruch 13,
**dadurch gekennzeichnet, dass**
zum Entleeren des Mediums die Brühkammer (3) als Ganzes aus dem Gehäuse (11) entnommen und geöffnet wird.

## Claims

1. Machine (1) for the preparation of a hot drink with a housing (11), a water tank (7) and a reclosable and refillable brew chamber (3), wherein
the brew chamber (3) can be completely removed from the housing for charging, emptying and cleaning,
the housing (11) has a drawer compartment (22) into which the brew chamber (3) can be inserted as a complete unit, and
the brew chamber (3) comprises an upper part (3b) and a lower part (3a),
**characterised in that**
the brew chamber (3) is formed in two parts and
the upper part (3b) and the lower part (3a) can be joined via a locking mechanism (24) and can be locked outside of the machine.

2. Machine according to Claim 1,
**characterised in that**
the dimensions of the drawer compartment (22) are formed such that the upper side of the upper part (3b) and the underside of the lower part (3a) contact the drawer compartment (22) at least partially.

3. Machine according to at least one of the Claims 1 or 2,
**characterised in that**
the dimensions of the drawer compartment (22) are formed such that the brew chamber (3) contacts the drawer compartment (22) at the side.

4. Machine according to at least one of the Claims 2 to 3,
**characterised in that**
a joint gap (19) between the upper part (3b) and the lower part (3a) is sealed by an internal seal (20).

5. Machine according to at least one of the Claims 1 to 4,
**characterised in that**
the brew chamber (3) has a section through which brewing water can be passed, wherein in this region a seal (16) is provided between the brew chamber (3) and the housing (11).

6. Machine according to at least one of the Claims 1 to 5,
**characterised in that**
the brew chamber (3) has a coding (33), which indicates a certain type of brew chamber and furthermore a sensor device (32) is provided which acquires the coding.

7. Machine according to Claim 6,
**characterised in that**
the machine (1) has a controller (13), which controls the brewing process in dependence of the acquired coding (33).

8. Machine according to at least one of the Claims 1 to 7,
**characterised in that**
the machine (1) has a region (9) for inserting a container (2).

9. Machine according to Claim 8,
**characterised in that**
the drawer compartment is arranged in or above the region (9) for inserting a container.

10. Machine according to at least one of the Claims 1 to 9,
**characterised in that**
the brew chamber (3) protrudes over an outer side of the housing (11).

11. Machine system with a machine for the preparation of a hot drink according to at least one of the Claims 1 to 10, as well as
several different brew chambers of a different type, each of which is designed for a medium to be processed.

12. Machine system according to Claim 11,
**characterised in that**
the different types of brew chamber each have an appropriate coding (33).

13. Method of preparing a hot drink with a machine (1) according to at least one of the Claims 1 to 12, wherein
a) the brew chamber (3), which is formed in two parts and which is removed as a complete unit from the housing (11), is opened and charged with the medium (23) to be brewed,
b) the upper part (3b) and the lower part (3a) of the brew chamber are joined with one another so that the brew chamber (3) is closed and locked and is inserted into the machine housing (11) as a complete unit,
c) brewing water is passed into the brew chamber (3) under pressure, and
d) the prepared hot drink is passed out of the brew chamber (3).

14. Method according to Claim 13,
**characterised in that**
the brew chamber (3) is removed from the housing (11) as a complete unit and opened for emptying the medium.

## Revendications

1. Machine (1) de préparation de boissons chaudes avec un boîtier (11), un réservoir d'eau et un compartiment de chauffe (3) qui peut être refermé et réapprovisionné, le compartiment de chauffe (3) pouvant être extrait complètement du boîtier pour le remplissage, le vidage et le nettoyage, le boîtier (11) présentant un compartiment coulissant (22) dans lequel le compartiment de chauffe (3) en entier peut être enfoncé et le compartiment de chauffe (3) présentant une partie supérieure (3b) et une partie inférieure (3a),
**caractérisée en ce que**
le compartiment de chauffe (39) est conçu en deux parties et
la partie supérieure (3b) et la partie inférieure (3a) peuvent être reliées par l'intermédiaire d'un mécanisme de fermeture (24) et verrouillées à l'extérieur de la machine.

2. Machine selon la revendication 1,
**caractérisée en ce**
**que** les dimensions du compartiment coulissant (22) sont conçues de telle sorte que la face supérieure de la partie supérieure (3b) et la face inférieure de la partie inférieure (3a) soient appliquées, du moins en partie, contre le compartiment coulissant (22).

3. Machine selon au moins l'une des revendications 1 ou 2,
**caractérisée en ce**
**que** les dimensions du compartiment coulissant (22) sont conçues de telle sorte que le compartiment de chauffe (3) soit appliqué latéralement contre le compartiment coulissant (22).

4. Machine selon au moins l'une des revendications 2 à 3,
**caractérisée en ce**
**qu'**une fente d'assemblage (19) est étanchée entre la partie supérieure (3b) et la partie inférieure (3a) par un joint d'étanchéité interne (20).

5. Machine selon au moins l'une des revendications 1 à 4,
**caractérisée en ce**
**que** le compartiment de chauffe (3) présente une section par l'intermédiaire de laquelle l'eau bouillante peut être amenée, un joint d'étanchéité (16) étant prévu dans cette zone entre le compartiment de chauffe (3) et le boîtier (11).

6. Machine selon au moins l'une des revendications 1 à 5,
**caractérisée en ce**
**que** le compartiment de chauffe (3) présente un codage (33) qui indique un type déterminé de compartiment de chauffe et qu'un dispositif de sonde (32) qui enregistre le codage est par ailleurs prévu.

7. Machine selon la revendication 6,
**caractérisée en ce**
**que** la machine (1) présente une commande (13) qui commande la procédure de chauffe en fonction du codage enregistré (33).

8. Machine selon au moins l'une des revendications 1 à 7,
**caractérisée en ce**
**que** la machine (1) comprend une zone (9) pour l'introduction d'un récipient (2).

9. Machine selon la revendication 8,
**caractérisée en ce**
**que** le compartiment coulissant est disposé dans ou au-dessus de la zone (9) prévue pour l'introduction d'un récipient.

10. Machine selon au moins l'une des revendications 1 à 9,
**caractérisée en ce**
**que** le compartiment de chauffe (3) déborde par une face externe du boîtier (11).

11. Système de machine avec une machine pour la préparation d'une boisson chaude selon au moins l'une des revendications 1 à 10 ainsi que
plusieurs compartiments de chauffe différents de types différents qui sont respectivement conçus pour un liquide à traiter.

12. Système de machines selon la revendication 11,
**caractérisé en ce**
**que** les différents types de compartiments de chauffe présentent respectivement un codage correspondant (33).

13. Procédé de préparation d'une boisson chaude avec une machine (1) selon au moins l'une des revendications 1 à 12, dans lequel
a) le compartiment de chauffe (3) conçu en deux parties, extrait du boîtier en entier, (11) est ouvert et réapprovisionné avec le liquide (23) à faire chauffer,
b) la partie supérieure (3b) et la partie inférieure (3a) du compartiment de chauffe sont reliées entre elles telle sorte que le compartiment de chauffe (3) soit fermé et verrouillé et soit inséré en entier dans le boîtier de la machine (11).
c) l'eau bouillante sous pression est amenée dans le compartiment de chauffe (3) et
d) la boisson chaude prête à consommer sort du compartiment de chauffe (3).

14. Procédé sur la revendication 13,
**caractérisé en ce**
**que** le compartiment de chauffe (3) est extrait en entier du boîtier (11) et ouvert pour en vider le liquide.
